# NEUE EUROPÄISCHE PATENTSCHRIFT

(11) **EP 2 289 672 B2**
(45) Veröffentlichungstag und Bekanntmachung des Hinweises auf die Entscheidung über den Einspruch: **29.07.2015**
(45) Hinweis auf die Patenterteilung: 04.04.2012
(21) Anmeldenummer: 10008575.2
(22) Anmeldetag: 17.08.2010
(51) Int. Cl.: B25J 9/16, B25J 19/06, F16P 3/08, F16P 3/00

(54) **Anordnung und Verfahren zur sicheren Steuerung eines Manipulators**
Method and assembly for securely controlling a manipulator
Agencement et procédé de commande sécurisée d'un manipulateur

(30) Priorität: 25.08.2009 DE 102009038721
(43) Veröffentlichungstag der Anmeldung: 02.03.2011
(73) Patentinhaber: KUKA Laboratories GmbH, 86165 Augsburg (DE)
(72) Erfinder: Bonin, Uwe, 86316 Friedberg (DE); Sturm, Stefan, 86687 Sulzdorf (DE)
(74) Vertreter: Schlotter, Alexander Carolus Paul

(56) Entgegenhaltungen:
- EP-A1- 0 465 710
- EP-A2- 1 247 622
- WO-A2-99/29474
- DE-A1- 4 432 768

## Beschreibung

Die vorliegende Erfindung betrifft ein Verfahren und eine Anordnung zur sicheren manuellen Steuerung eines Manipulators, insbesondere eines Roboters wie beispielsweise eines Industrieroboters.

Aufgrund des Gefährdungspotentials für Bedienpersonal muss die Bedienung von Industrierobotern in sicherer Technik ausgeführt sein. So schreibt beispielsweise die einschlägige Norm ISO 10218-1:2006 vor, dass ein Programmierhandgerät einen dreistufigen Zustimmungstaster aufweisen muss. Solche Taster, die beispielsweise aus der DE 100 23 199 A1 und DE 299 23 980 U1 bekannt sind, unterscheiden eine nicht betätigte Stellung, eine Panikstellung mit durchgedrücktem Taster und eine Mittelstellung. Nur wenn die Mittelstellung in sicherer Technik erfasst und an die Steuerung des Roboters gemeldet wird, erfolgt eine Bewegung des Roboters.

Eine solche sichere Erfassung, Auswertung und Übertragung von Steuerbefehlen, wie sie beispielsweise in der DE 44 32 768 C2 und WO 99/29474 A2 beschrieben wird, ist aufgrund der erforderlichen Redundanz bzw. Diversität, Betriebsbewährtheit und dergleichen aufwändig.

Die EP 1 247 622 A2 schlägt einen Safety-Controller vor, der einen Roboter in einem Schutzraum mit Schutztüren überwacht. Ein Programmierhandgerät ist mit sicherheitsgerichteten Schaltern bzw. Tastern ausgeführt.

Aufgabe der vorliegenden Erfindung ist es, die sichere Steuerung eines Manipulators zu verbessern.

Diese Aufgabe wird durch ein Verfahren mit den Merkmalen des Anspruchs 1 gelöst. Anspruch 4 stellt eine Anordnung, Anspruch 9 ein Computerprogramm, Anspruch 10 ein Computerprogrammprodukt, insbesondere einen Datenträger bzw. ein Speichermedium, zur Durchführung eines Verfahrens nach Anspruch 1 unter Schutz. Die Unteransprüche betreffen vorteilhafte Weiterbildungen.

Der Erfindung liegt die Idee zugrunde, die Sicherheits- und die Steuerungsfunktionalität zu trennen. Dies ermöglicht es einerseits, zum manuellen Steuern des Manipulators eine Bedieneinrichtung einer niedrigeren Sicherheitsstufe einzusetzen, da dieses nur die Steuerungsfunktionalität realisieren muss und somit einfacher, günstiger, mobiler und/oder kompakter ausgebildet sein kann. Andererseits kann zur Gewährleistung der Sicherheitsfunktionalität eine Schutzeinrichtung einer höheren Sicherheitsstufe genutzt werden, die beispielsweise für einen Automatikbetrieb des Manipulators ohnehin zur Verfügung steht. Stellt also beispielsweise eine, vorzugsweise für einen Automatikbetrieb des Manipulators vorgesehene, Schutzeinrichtung wie etwa ein Schutzzaun mit überwachter Schutztür sicher, dass sich kein Bediener innerhalb eines unzulässigen Schutzbereichs befindet, kann der Manipulator erfindungsgemäß auch in nicht sicherer Technik mittels einer Bedieneinrichtung einer niedrigen Sicherheitsstufe gesteuert werden.

Dementsprechend wird erfindungsgemäß der Manipulator mittels einer Bedieneinrichtung einer ersten Sicherheitsstufe gesteuert, die mit einer Steuereinrichtung des Manipulators verbunden ist.

Die Bedieneinrichtung kann dabei beispielsweise ein stationärer oder mobiler Personal Computer ("PC") oder ein Handgerät wie beispielsweise ein sogenannter Personal Digital Assistant ("PDA"), ein Mobilfunktelefon oder dergleichen sein und aufgrund der niedrigen Sicherheitsanforderung vorzugsweise in nicht-sicherer Standard-Technologie ausgeführt sein.

Die Bedieneinrichtung kann mit der Steuereinrichtung drahtgebunden, insbesondere über ein Netzwerk, oder drahtlos, vorzugsweise mittels elektromagnetischer Strahlung wie etwa Funk, optischer oder Infrarot-Signale verbunden sein.

Als Steuerung wird insbesondere die Eingabe von Soll-Positionen und/oder Soll-Positionsänderungen, etwa für Achsen des Manipulators oder Lage und/oder Orientierung eines manipulatorfesten Referenzpunktes bzw. -koordinatensystems wie etwa des TCPs ("Tool Center Point"), Werkzeugbewegungen und/oder -aktivierungen und dergleichen bezeichnet, wobei beim bevorzugten online-Teachen der Manipulator Steuerbefehle direkt ausführt und/oder abspeichert werden. Insofern wird unter einem Steuern insbesondere die unmittelbare Bewegung des Roboters mittels entsprechender Steuerbefehle verstanden. Steuerbefehle können beispielsweise über Tasten, einen Joystick, eine Maus und/oder einen Touch-Screen der Bedieneinrichtung eingegeben werden.

Dabei kann die Steuerungssoftware, beispielsweise ein Bahninterpolator, in der Bedien- und/oder der Steuereinrichtung implementiert sein, so dass etwa in einer bevorzugten Ausführung mittels der Bedieneinrichtung nur die Eingabe und Übertragung von Steuerbefehlen erfolgt. Die Bedieneinrichtung kann zusätzlich eine Anzeige, etwa zur Eingabedarstellung und/oder Visualisierung von Eingabe- und/oder anderen Parametern, aufweisen.

Erfindungsgemäß überwacht eine Schutzeinrichtung einer zweiten, höheren Sicherheitsstufe, die mit der Steuereinrichtung des Manipulators verbunden ist, einen zulässigen Zustand. Ein zulässiger Zustand kann insbesondere dann vorliegen, wenn sich keine Person innerhalb eines unzulässigen Schutzbereichs befindet. Denn dann kann auch bei einer Fehlfunktion durch die nicht sicherer Bedieneinrichtung kein Personenschaden auftreten.

Dies kann beispielsweise durch einen den unzulässigen Schutzbereich umgrenzenden Schutzzaun mit einer oder mehreren überwachten Schutztüren sichergestellt werden. Gleichermaßen kann der Schutzbereich auch, beispielsweise optisch, überwacht und so ein Eintreten bzw. Aufenthalt von Personen in diesem erfasst werden. In diesen Fällen überträgt die Schutzeinrichtung keinen zulässigen Zustand an die Steuereinrichtung, sofern ein Bediener sich innerhalb des unzulässigen Schutzbereichs befindet.

Die Schutzeinrichtung kann gleichermaßen ein Freigabesignal, welches einen zulässigen Zustand anzeigt, wegnehmen und/oder ein Störsignal, welches einen unzulässigen Zustand anzeigt, übertragen, um keinen zulässigen Zustand an die Steuereinrichtung zu übertragen. Auch dies kann, wie vorstehend erläutert, drahtgebunden, insbesondere über ein Netzwerk, oder drahtlos erfolgen.

Zusätzlich zu einer Überwachung, ob sich eine Person innerhalb eines unzulässigen Schutzbereichs befindet, kann auch der Manipulator selber überwacht werden, beispielsweise durch sichere Erfassung seiner Gelenkstellungen und/oder Positionen eines oder mehrerer seiner Glieder oder manipulatorfester Referenzpunkte bzw. - koordinatensysteme und den Vergleich mit zulässigen Wertebereichen.

Eine Sicherheitsstufe kann beispielsweise einer Sicherheitskategorie gemäß einer einschlägigen Norm entsprechen. Dabei kann eine höhere Sicherheitsstufe, insbesondere die zweite Sicherheitsstufe, einer sichere Technik entsprechen und beispielsweise mittels entsprechender Redundanz bzw. Diversität, etwa durch mehrkanalige Schutzeinrichtungen und eine sichere Datenübertragung an und Datenauswertung in der Steuereinrichtung, ausreichende Betriebsbewährtheit, Ausfallsicherheit oder dergleichen gewährleistet sein. Dementsprechend kann eine niedrigere Sicherheitsstufe, insbesondere die erste Sicherheitsstufe, in nicht-sicherer Standardtechnologie ausgeführt sein. Selbst Technologien, die keinerlei Sicherheitsanforderungen genügen, können eine niedrige oder erste Sicherheitsstufe im Sinne der vorliegenden Erfindung erfüllen, wobei in einer bevorzugten Ausführung auch die erste Sicherheitsstufe gewisse (Mindest)Sicherheitsanforderungen erfüllt, die jedoch vorzugsweise unter denen der sicheren Technik liegen.

Die Erfindung beruht wie vorstehend erläutert auf der Erkenntnis, dass die erhöhten Sicherheitsanforderungen, die bisher an Bedieneinrichtungen zum Steuern von Manipulatoren gestellt werden, entfallen können, sofern die Sicherheit durch eine separate, vorzugsweise ohnehin beispielsweise für den Automatikbetrieb vorhandene Schutzeinrichtung gewährleistet ist, etwa, wenn diese sicherstellt, dass der Bediener der Bedieneinrichtung sich außerhalb des unzulässigen Schutzbereichs aufhält.

Dementsprechend führt der Manipulator erfindungsgemäß alle oder wenigstens bestimmte der durch die Bedieneinrichtung vorgegebenen Aktionen nur aus, sofern die Schutzeinrichtung einen zulässigen Zustand an die Steuereinrichtung überträgt. Insbesondere kann es ausreichen, Bewegungen des Manipulators und/oder Werkzeugbewegungen und/oder-aktivitäten zu verhindern, wenn die Schutzeinrichtung keinen zulässigen Zustand an die Steuereinrichtung überträgt.

Hierzu kann die Steuereinrichtung beispielsweise die Bedieneinrichtung abschalten, Steuerbefehle der Bedieneinrichtung ignorieren oder ihre Ausführung bis zur Freigabe durch die Schutzeinrichtung verzögern.

Gleichermaßen können auch alle Aktionen des Manipulators unterbleiben; solange die Schutzeinrichtung keinen zulässigen Zustand an die Steuereinrichtung überträgt, oder es werden nur Bewegungen in nicht ausgesuchten Achsen, etwa Handachsen, ausgeführt, während gefährlichen Achsen, beispielsweise Karussell-, Schwingenund/oder Armachsen stillgesetzt werden. Zusätzlich oder alternativ unterbleiben in einer bevorzugten Ausführung Aktionen, insbesondere Bewegungen erst, nachdem der Manipulator in einen sicheren Zustand überführt worden ist, wenn die Schutzeinrichtung keinen zulässigen Zustand mehr an die Steuereinrichtung überträgt.

Vorzugsweise erfolgt auch, solange die Schutzeinrichtung keinen zulässigen Zustand an die Steuereinrichtung überträgt, eine Anzeige an der Bedieneinrichtung, insbesondere eine Anzeige des unzulässigen Zustandes.

Insbesondere, um bereits vorhandene Schutzeinrichtungen wie etwa einen Schutzzaun mit Schutztür für den Automatikbetrieb eines Industrieroboters zu nutzen, kann die Steuereinrichtung erfindungsgemäß zum Steuern des Manipulators mittels der Bedieneinrichtung in einen bestimmten Betriebsmodus gebracht werden, in dem zum Beispiel Bewegungen des Manipulators nur ausgeführt werden, solange die Schutzeinrichtung aktiv ist, d.h. einen zulässigen Zustand bzw. keinen unzulässigen Zustand überträgt. Die Umschaltung in diesen Betriebsmodus kann durch Aktivierung der Bedieneinrichtung, durch Verbinden von Steuer- und Bedieneinrichtung, manuell und/oder bei Eingabe eines Steuerbefehls in die Bedieneinrichtung erfolgen.

Insbesondere in diesem Fall kann der Manipulator auch mittels einer ausgewählten von mehreren Bedieneinrichtungen gesteuert werden. Vorzugsweise wird dann durch gegenseitige Kommunikation unter den Bedieneinrichtungen, dominante Signalübertragung, oder durch die Steuereinrichtung sichergestellt, dass stets nur eine Bedieneinrichtungen aktiv ist bzw. die Eingabe von Steuerbefehlen an die Steuereinrichtung ermöglicht.

Um auch dem Bediener, der den Manipulator erfindungsgemäß über eine nicht-sichere Bedieneinrichtung sicher steuert, die Möglichkeit zu bieten, auf von der Schutzeinrichtung nicht erkannte Probleme zu reagieren, ist in einer bevorzugten Ausführung einen Nothalt-Eingabeeinrichtung einer höheren Sicherheitsstufe, insbesondere in sicherer Technik, mit der Steuereinrichtung des Manipulators verbunden, wobei es bevorzugt ist, diese in der Nähe der nicht-sicheren Bedieneinrichtung, insbesondere im Griffbereich des Bedieners der Bedieneinrichtung anzuordnen. Eine solche Nothalt-Eingabeeinrichtung kann beispielsweise als standardisierter Not-Aus einfach, kompakt und günstig an oder bei einem PC, PDA oder dergleichen angeordnet werden.

Die Bedieneinrichtung der ersten Sicherheitsstufe weist wie bisher eingesetzte Bedieneinrichtungen, die in sicherer Technik ausgeführt sind, eine Zustimmungseinrichtung auf. Diese kann insbesondere eine Taste oder Tastenkombination einer Tastatur der Bedieneinrichtung umfassen. Da diese nicht dem Personenschutz dient, unterliegt diese Zustimmungseinrichtung im Gegensatz zum Stand der Technik keinen erhöhten Sicherheitsanforderungen.

Zusätzlich oder alternativ zu einem oder mehreren weiteren Bedieneinrichtungen einer niedrigeren, insbesondere ersten Sicherheitsstufe können ein oder mehrere weitere Bedieneinrichtungen einer höheren, insbesondere zweiten Sicherheitsstufe vorgesehen sein. Insbesondere kann zum Steuern des Manipulators bei deaktivierter Schutzeinrichtung, etwa einem Bediener innerhalb des Schutzbereiches, ein in sicherer Technik ausgeführtes Programmierhandgerät oder dergleichen verwendet werden. Die Steuerung führt die durch diese sichere Bedieneinrichtung vorgegebene Aktionen aus, selbst wenn die Schutzeinrichtung keinen zulässigen Zustand an die Steuereinrichtung überträgt, indem beispielsweise eine entsprechender Betriebsmodus der Steuereinrichtung ausgewählt und die nicht-sichere Bedieneinrichtung deaktiviert oder ignoriert wird.

Weitere Vorteile und Merkmale ergeben sich aus den Unteransprüchen und den Ausführungsbeispielen. Hierzu zeigt, teilweise schematisiert, die einzige:

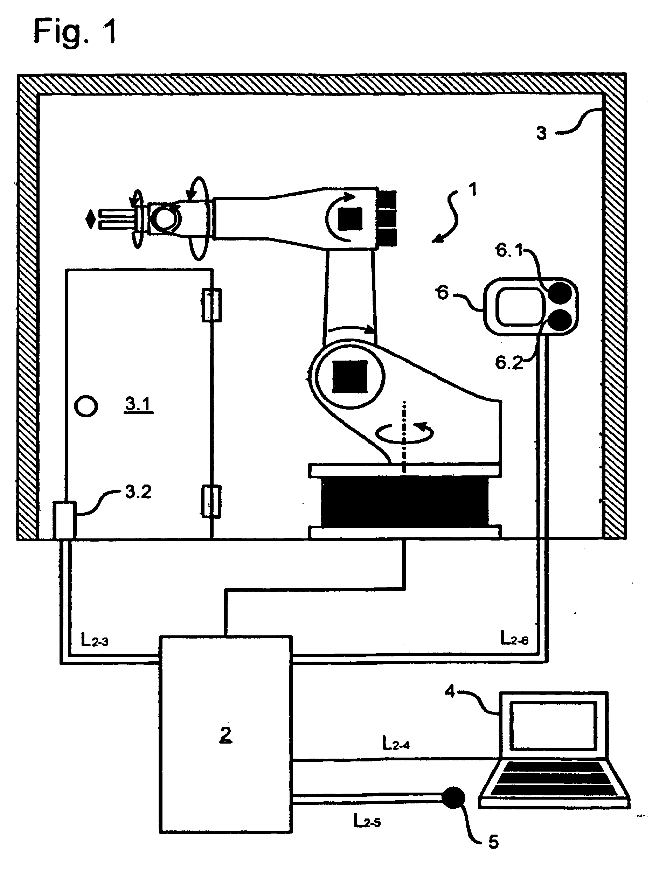

Fig. 1: eine Steuerung eines Roboters nach einer Ausführung der vorliegenden Erfindung.

Fig. 1 zeigt im Querschnitt einen sechsachsigen Industrieroboter 1 mit seinem Steuerschrank 2. Der Roboter 1 darf sich nur innerhalb eines durch einen Schutzzaun 3 umgrenzten Arbeitsbereich bewegen, in dem sich bei Automatikbetrieb keine Personen aufhalten dürfen und der somit einen unzulässigen Schutzbereich definiert.

Hierzu weist er eine Schutztüre 3.1 auf, die über einen Schließkontakt 3.2 überwacht wird. Um die Personensicherheit zu gewährleisten, ist die Schutzeinrichtung mit Schutzzaun 3, Schutztür 3.1 und Schließkontakt 3.2 in sicherer Technik ausgeführt. Insbesondere ist der Schließkontakt 3.2 in sicherer Technik mit dem Steuerschrank 2 über die in Fig. 1 mehrkanalig angedeutete redundante Leitung L₂₋₃ verbunden und weist entsprechend eine zweite, hohe Sicherheitsstufe auf, beispielsweise Kategorie 3.

Zur Steuerung des Roboters 1, insbesondere zur Eingabe von Fahrbefehlen in Gelenk- oder Weltkoordinaten, ist ein Standard-PC 4 vorgesehen. Dieser ist über ein einfaches Netzwerk, das in Fig. 1 einkanalig durch die Leitung L₂₋₄ angedeutet ist, mit dem Steuerschrank 2 verbunden, der die über die Tastatur des PCs 4 eingegeben Steuerkommandos interpretiert, weiterverarbeitet und die Antriebe des Roboters 1 entsprechend ansteuert. Auf dem Bildschirm des PCs1 werden die Eingabedaten visualisiert, beispielsweise durch Darstellung des Roboters im virtuellen Arbeitsraum und/oder seiner Gelenkwinkel. Der einkanalig mit dem Steuerschrank 2 verbundene Standard-PC4 ist damit eine in nicht-sicherer Technik ausgeführte Bedieneinrichtung einer ersten, niedrigen Sicherheitsstufe, beispielsweise der Kategorie 1 oder darunter.

Um gleichwohl Personensicherheit durch von der Schutzeinrichtung nicht erkannte Probleme zu gewährleisten, ist in Griffnähe neben dem PC4 ein Standard-Not-Aus 5 (in Fig. 1 mehrkanalig durch die Leitung L₂₋₄ angedeutet) mit dem Steuerschrank 2 verbunden und bildet so eine Nothalt-Eingabeeinrichtung einer gleich hohen oder höheren Sicherheitsstufe wie die Schutzeinrichtung 3 - 3.2.

Um auch innerhalb des Schutzbereichs den Roboter sicher steuern zu können, kann zusätzlich ein herkömmliches Programmierhandgerät 6 mit einem Not-Aus 6.1 und einem Zustimmungstaster 6.2 in sicherer Technik über die mehrkanalige Leitung L₂₋₆ mit dem Steuerschrank 2 verbunden werden.

Durch eine Benutzeraktion kann die Kontrolle über den Manipulator-entweder dem PC 4 oder, sofern vorhanden, dem Programmierhandgerät 6 übergeben werden. Sofern die Kontrolle an das Programmierhandgerät 6 übergeben ist, ignoriert die Steuerung 2 des Roboters Eingaben vom PC 4. Umgekehrt führt die Steuerung in einem Betriebsmodus zum Steuern des Manipulators mittels der Bedieneinrichtung 4, in den die Steuereinrichtung 2 durch Umschalten der Steuerung gebracht wird, nur durch den PC 4 vorgegebene Bewegungen aus, solange der Schließkontakt 3.2 eine geschlossene Schutztür 3.1 bzw. keine geöffnete Schutztür 3.1 an die Steuereinrichtung 2 meldet, und damit sichergestellt ist, das keine Person den durch den Schutzzaun 3 definierten Schutzbereich betritt. Kommt es zu anderen problemen, beispielsweise einem Eindringen in den Schutzbereich durch ein Loch des Schutzzaunes 3, kann der Bediener den Roboter durch Betätigen des in rasch erreichbarer Nähe angeordneten Not-Aus-Knopfes 5 sicher stillsetzen.

Somit kann der Roboter durch einen Standard-PC 4, der in nicht-sicherer Technik ausgeführt und mit dem Steuerschrank 2 verbunden ist, aufgrund der Nutzung der für den Automatikbetrieb vorgesehenen Schutzeinrichtung 3, 3.1, 3.2 kostengünstig und trotzdem sicher gesteuert werden.

### Bezugszeichenliste

- 1: Roboter
- 2: Steuerschrank
- 3: Schutzzaun
- 3.1: Schutztür
- 3.2: Schließkontakt
- 4: Standard-PC (Bedieneinrichtung)
- 5: Not-Aus
- 6: Programmierhandgerät
- 6.1: Not-Aus
- 6.2: Zustimmungstaster
- L₂₋ₓ: Leitung (ein-/zweikanalig)

## Patentansprüche

1. Verfahren zur sicheren Steuerung eines Manipulators, insbesondere eines Roboters (1), mit den Schritten:
Manuelles Steuern des Manipulators mittels einer Bedieneinrichtung (4), die mit einer Steuereinrichtung (2) des Manipulators verbunden (L₂₋₄) ist; und
Überwachen eines zulässigen Zustandes mittels einer Schutzeinrichtung (3, 3.1, 3.2), die mit der Steuereinrichtung des Manipulators verbunden (L₂₋₃) ist;
**dadurch gekennzeichnet, dass** die Bedieneinrichtung (4) eine erste, niedrigere Sicherheitsstufe und eine Zustimmungseinrichtung, die nicht dem Personenschutz dient und keinen erhöhten Sicherheitsanforderungen unterliegt, und die Schutzeinrichtung (3, 3.1, 3.2) eine zweite, höhere Sicherheitsstufe aufweisen, wobei zum Steuern des Manipulators mittels der Bedieneinrichtung die Steuereinrichtung durch Aktivieren der Bedieneinrichtung, durch Verbinden von Steuer- und Bedieneinrichtung, manuell und/oder bei Eingabe eines Steuerbefehls in die Bedieneinrichtung in einen bestimmten Betriebsmodus gebracht wird, in dem der Manipulator eine durch die Bedieneinrichtung (4) vorgegebene Aktion nur ausführt, sofern die Schutzeinrichtung (3, 3.1, 3.2) einen zulässigen Zustand an die Steuereinrichtung überträgt, wobei die Schutzeinrichtung (3, 3.1, 3.2) keinen zulässigen Zustand an die Steuereinrichtung (2) überträgt, sofern ein Bediener sich innerhalb eines unzulässigen Schutzbereichs befindet.

2. Verfahren nach Anspruch 1, **dadurch gekennzeichnet, dass** die durch die Bedieneinrichtung (4) vorgegebene Aktion eine Bewegung des Manipulators (1) umfasst.

3. Verfahren nach einem der vorhergehenden Ansprüche, **dadurch gekennzeichnet, dass** der Manipulator mittels einer ausgewählten von mehreren Bedieneinrichtungen (4; 6) gesteuert wird.

4. Anordnung zur Steuerung eines Manipulators, insbesondere eines Roboters (1), umfassend:
eine Steuereinrichtung (2) zur Steuerung des Manipulators;
eine mit der Steuereinrichtung verbundene Bedieneinrichtung (4) einer ersten, niedrigeren Sicherheitsstufe zum manuellen Steuern des Manipulators, die eine Zustimmungseinrichtung aufweist; und
eine mit der Steuereinrichtung verbundene Schutzeinrichtung (3, 3.1, 3.2) einer zweiten, höheren Sicherheitsstufe zur Überwachung eines zulässigen Zustandes;
wobei die Anordnung zur Durchführung eines Verfahrens nach einem der vorhergehenden Ansprüche eingerichtet ist.

5. Anordnung nach Anspruch 4, **gekennzeichnet durch** einen Nothalt-Eingabeeinrichtung (5) einer höheren Sicherheitsstufe, die mit der Steuereinrichtung (2) des Manipulators verbunden ist.

6. Anordnung nach einem der vorhergehenden Ansprüche 4 bis 5, **gekennzeichnet durch** wenigstens eine weitere Bedieneinrichtung einer niedrigeren Sicherheitsstufe.

7. Anordnung nach einem der vorhergehenden Ansprüche 4 bis 6, **gekennzeichnet durch** wenigstens eine weitere Bedieneinrichtung (6) einer höheren Sicherheitsstufe.

8. Anordnung nach einem der vorhergehenden Ansprüche 4 bis 7, **dadurch gekennzeichnet, dass** die Schutzeinrichtung einen Schutzzaun (3), eine Schutztür (3.1), einen Schließkontakt (3.2) und/oder eine, insbesondere optische, Schutzraumüberwachung aufweist.

9. Computerprogramm, das ein Verfahren nach einem der Ansprüche 1 bis 3 ausführt, wenn es in einer Steuereinrichtung einer Anordnung nach einem der Ansprüche 4 bis 8 abläuft.

10. Computerprogrammprodukt mit Programmcode, der auf einem maschinenlesbaren Träger gespeichert ist und ein Computerprogramm nach Anspruch 9 umfasst.

## Claims

1. Method for safe controlling of a manipulator, particularly a robot (1), comprising the following steps:
manual controlling of the manipulator by a user interface (4), which is connected (L₂₋₄) to a control apparatus (2) of the manipulator; and
monitoring an admissible state by a protection apparatus (3, 3.1, 3.2), which is connected (L₂₋₃) to the control apparatus of the manipulator;
**characterized in that**
the user interface (4) has a first, lower safety level and an enabling device, which does not serve for personal protection and is not subject to increased safety requirements, and
the protection apparatus (3, 3.1, 3.2) has a second, higher safety level,
wherein for the control of the manipulator by the user interface the control apparatus is transferred by activating the user interface, by connecting the control apparatus and the user interface, manually and/or by entering a control command into the user interface, to a defined operation mode in which the manipulator only performs an operation commanded by the user interface (4), if the protection apparatus (3, 3.1, 3.2) transmits an admissible state to the control apparatus,
wherein the protection apparatus (3, 3.1, 3.2) does not transmit an admissible state to the control apparatus (2), if the user is within an inadmissible protection area.

2. Method according to claim 1, **characterized in that** the operation, which is commanded by the user interface (4), comprises a motion of the manipulator.

3. Method according to one of the preceding claims, **characterized in that** the manipulator is controlled by one, out of a plurality of user interfaces, selected user interface (4; 6).

4. Arrangement for controlling of a manipulator, particularly a robot (1), comprising:
a control apparatus (2) for controlling the manipulator;
a user interface (4) of a first, lower safety level for manual controlling the manipulator, which is connected to the control apparatus (2) and which has an enabling device; and
a protection apparatus (3, 3.1, 3.2) of a second, higher safety level for monitoring of an admissible state which is connected to the control apparatus,
wherein the arrangement is designed to perform a method according to one of the preceding claims.

5. Arrangement according to claim 4, **characterized by** an emergency stop user interface (5) of a higher safety level, which is connected to the control apparatus (2) of the manipulator.

6. Arrangement according to one of the preceding claims 4 to 5, **characterized by** at least one additional user interface of a lower safety level.

7. Arrangement according to one of the preceding claims 4 to 6, **characterized by** at least one additional user interface (6) of a higher safety level.

8. Arrangement according to one of the preceding claims 4 to 7, **characterized in that** the protection apparatus has a safety fence (3), a safety door (3.1), a closing contact (3.2) and/or a, particularly optical, protection area monitoring.

9. Computer program, which performs a method according to one of the claims 1 to 3, if it runs in a control apparatus of an arrangement according to one of the claims 4 to 8.

10. Computer program product with programming code, which is saved on a machine-readable medium and comprises a computer program according to claim 9.

## Revendications

1. Procédé pour la commande en sécurité d'un manipulateur, en particulier d'un robot (1), comprenant les étapes suivantes :
pilotage manuel du manipulateur au moyen d'un dispositif de commande (4) qui est relié (L₂₋₄)à un dispositif de pilotage (2) du manipulateur ; et
surveillance d'un état admissible au moyen d'un dispositif de protection (3, 3.1, 3.2) qui est relié (L₂₋₃) au dispositif de pilotage du manipulateur ;
**caractérisé en ce que** le dispositif de commande (4) présenteun premier niveau de sécurité, inférieur, et un dispositif de consentement, qui n'est pas soumis à des exigences de sécurité élevées, et le dispositif de protection (3. 3.1, 3.2) présentent un deuxième niveau de sécurité, supérieur,
le dispositif de pilotage, pour piloter le manipulateur, étant mis manuellement et/ou lors d'une entrée d'une commande de pilotage dans un mode de fonctionnement déterminé par activation du dispositif de commande, par connexion des dispositifs de pilotage et de commande, dans lequel le manipulateur n'exécute une action prescrite par le dispositif de commande (4) que si le dispositif de protection (3, 3.1, 3.2) transmet un état admissible au dispositif de pilotage,
.le dispositif de protection ne transmettant pas d'état admissible au dispositif de pilotage, si un utilisateur se trouve dans une zone de protection non-admissible.

2. Procédé selon la revendication 1, **caractérisé en ce que** l'action prescrite par le dispositif de commande (4) comprend un mouvement du manipulateur (1).

3. Procédé selon l'une des revendications précédentes, **caractérisé en ce que** le manipulateur est piloté au moyen de l'un, choisi, de plusieurs dispositifs de commande (4 ; 6).

4. Dispositif pour le pilotage d'un manipulateur, en particulier d'un robot (1), comprenant :
un dispositif de pilotage (2) pour le pilotage du manipulateur ;
un dispositif de commande (4) relié au dispositif de pilotage, d'un premier niveau de sécurité, inférieur, pour le pilotage manuel du manipulateur ; et un dispositif de protection (3, 3.1, 3.2) relié au dispositif de pilotage, d'un deuxième niveau de sécurité, supérieur, pour la surveillance d'un état admissible ; le dispositif étant conçu pour la mise en oeuvre d'un procédé selon une des revendications précédentes.

5. Dispositif selon la revendication 4, **caractérisé par** un dispositif d'entrée d'arrêt d'urgence (5) d'un niveau de sécurité supérieur, qui est relié au dispositif de pilotage (2) du manipulateur.

6. Dispositif selon l'une des revendications précédentes 4 à 5, **caractérisé par** au moins un dispositif de commande additionnel d'un niveau de sécurité inférieur.

7. Dispositif selon l'une des revendications précédentes 4 à 6, **caractérisé par** au moins un dispositif de commande additionnel (6) d'un niveau de sécurité supérieur.

8. Dispositif selon l'une des revendications précédentes 4 à 7, **caractérisé en ce que** le dispositif de protection présente une barrière de protection (3), une porte de protection (3. 1), un contact à fermeture (3. 2) et/ou une surveillance de l'espace à protéger, de préférence de nature optique.

9. Programme d'ordinateur qui met en oeuvre un procédé selon l'une des revendications 1 à 3 lorsqu'il est exécuté dans un dispositif de pilotage appartenant à un dispositif selon l'une des revendications 4 à 8.

10. Produit programme d'ordinateur comprenant un code de programme qui est mémorisé sur un support lisible par ordinateur et qui comprend un programme d'ordinateur selon la revendication 9.
